# DEMANDE DE BREVET EUROPEEN

(11) **EP 3 599 143 A1**
(43) Date de publication de la demande: **29.01.2020**
(21) Numéro de dépôt: 19020372.9
(22) Date de dépôt: 11.06.2019
(51) Int. Cl.: B62B 9/28

(54) **DISPOSITIF DE POUSSÉE ENTRE UN CHARIOT ÉLECTRIQUE ET UNE POUSSETTE**

(30) Priorité: 14.06.2018 FR 1870701
(71) Demandeur: Dubois, Olivier, 69005 Lyon (FR)
(72) Inventeur: Timothéé, Penet, 69005 Lyon (FR); Dubois, Olivier, 69005 Lyon (FR)

(57) **Abrégé**

L'invention concerne un dispositif (1) de poussée entre un chariot (2) électrique véhiculant un adulte et une poussette (3) pour enfants ou marchandise.

Le dispositif (1) comporte au moins un ou plusieurs connecteurs (11) à fixer à la poussette (3), une barre de poussée de longueur réglable (14), un connecteur (16) à fixer au chariot (2) électrique, et au moins une liaison (13 ou 15) pivot ou rotule.

Le dispositif (1) est particulièrement destiné à un adulte qui souhaite véhiculer son enfant et lui-même. Le dispositif (1) se déconnecte rapidement de la poussette (3) comme du chariot (2) électrique, ce qui permet de passer rapidement de l'utilisation de la poussette (3) seule, ou du chariot (2) électrique seul, à l'utilisation de l'ensemble poussette (3) + chariot (2) électrique + dispositif (1) de poussée.

## Description

### Domaine technique

La présente invention concerne un dispositif de poussée entre un chariot électrique et une poussette.

Le chariot électrique est composé d'au moins une roue entraînée par au moins un moteur. Un système de contrôle permet d'avancer, de reculer et de tourner le chariot. Le chariot est en général capable de transporter un individu. Les chariots électriques pour le transport de personnes sont de forme multiples : skate électrique à quatre roues, trottinette électrique, vélo électrique, gyropode électrique biroue -souvent désigné par le terme anglais hoverboard-, gyropode électrique monoroue. Le dispositif selon l'invention est particulièrement adapté aux giropodes électriques biroues, mais ce n'est pas limitatif.

La poussette est un système à roues permettant de déplacer un enfant ou un objet sans le porter. Le dispositif selon l'invention est particulièrement adapté aux poussettes pour enfants. Certaines poussettes sont pliables. D'autres poussettes peuvent transporter plusieurs enfants. Certaines ont des roues de petites tailles, d'autres des roues de taille semblables à celles d'un vélo.

Le dispositif de poussée entre le chariot électrique et la poussette permet de relier le chariot à la poussette et de transmettre les efforts de propulsion du chariot à la poussette. L'individu qui contrôle le chariot peut alors déplacer également la poussette. Le dispositif selon l'invention est conçu pour s'adapter à la multitude des poussettes existantes, et pour ne pas entraver les caractéristiques de la poussette : pliabilité par exemple. Le dispositif selon l'invention est également conçu pour s'adapter au moins à la multitude des giropodes électriques biroues.

L'exemple d'utilisation typique concerne les déplacements urbains impliquant un enfant qui marche encore mal et un parent qui trouve fatigant de pousser la poussette et l'enfant. Le dispositif permet à ces deux individus de se déplacer sans peine à la crèche, à l'école, ou encore au marché.

Un exemple d'utilisation moins typique mais possible concerne le déplacement d'un individu et d'une charge importante. Avec le chariot relié à la poussette par le dispositif de poussée, l'individu réalise ce trajet avec aisance.

### Technique antérieure

L'état de l'art le plus proche du dispositif selon l'invention se trouve dans la littérature concernant :
- les poussettes électriques,
- les planches destinées au transport d'enfant à accrocher derrière les poussettes,
- et les planches à roulettes destinées à améliorer la propulsion de la poussette et à accrocher derrière la poussette.

Le brevet US2008224432 décrit une planche à deux roues, destinée au transport d'un enfant debout derrière la poussette. Les parents peuvent ainsi pousser à la fois un enfant qui ne sait pas encore marcher, et un autre se tenant debout mais incapable de tenir la distance du trajet envisagé. Le dispositif décrit dans ce brevet comporte des connecteurs à fixer sur la poussette de manière permanente, deux bras clipsables à ces connecteurs, une planche horizontale destinée à accueillir l'enfant, et deux roues. L'entraxe entre les deux bras est ajustable de manière à s'adapter à une grande variété de poussette. L'angle entre les bras et la planche est réglable de manière à conserver une planche horizontale indépendamment de la hauteur à laquelle les connecteurs sont fixés à la poussette. Le système est conçu pour que les bras se déclipsent rapidement des connecteurs, afin de pouvoir plier la poussette. Les connecteurs sont équipés d'une liaison pivot de manière à pouvoir être accroché à une barre transversale ou verticale.

Le brevet US2015197264 décrit une planche à roulette, connectée de manière amovible à une poussette. Cette planche à roulette permet de pousser la poussette à la manière d'une trottinette : un pied sur la planche, l'autre qui balance en poussant le sol à intervalle de temps régulier. Cette planche permet donc de déplacer l'ensemble à plus grande vitesse qu'à la vitesse de la marche. Cette planche incorpore éventuellement un système de freinage ou un système de propulsion électrique, permettant de s'affranchir de tout effort pour propulser l'ensemble.

On trouve sur le marché une multitude de poussettes électriques. Certains projets publiés sur internet, vont jusqu'à proposer des poussettes motorisés électriquement, qui suivent ou précèdent l'adulte : celui-ci peut alors téléphoner en même temps, courir, etc...

Le brevet US20151444 décrit une poussette motorisée électriquement et contrôlable à distance.

La technique antérieure ne propose pas de système convenable, permettant de motoriser à la fois l'adulte et l'enfant, s'adaptant à une multitude de poussette, gardant la caractéristique de pliabilité pour les poussettes pourvues de cette caractéristique, s'adaptant à un grand nombre de chariots électriques, et permettant de passer de la fonction poussette seule, ou chariot électrique seul, à la fonction motorisation de l'adulte et de l'enfant.

### Exposé de l'invention

L'invention se propose de décrire un dispositif de poussée entre un chariot électrique et une poussette.

Le système selon l'invention vient remédier aux inconvénients listés précédemment, il est pensé pour :
- s'adapter à un grand nombre de poussettes,
- s'adapter à un grand nombre de chariots électriques,
- motoriser à la fois l'enfant et l'adulte,
- conserver la caractéristique de pliabilité des poussettes pourvues de cette caractéristique.
- passer en quelques secondes de la fonction poussette seule à la fonction poussette motorisée et vice-versa,
- passer en quelques secondes de la fonction chariot motorisé seul à la fonction poussette + chariot motorisés et vice-versa.

Le dispositif selon l'invention comporte au moins :
- un ou plusieurs connecteurs à fixer sur la poussette,
- une barre de poussée de longueur réglable,
- au moins une liaison rotule ou pivot,
- un connecteur entre le chariot électrique et la barre de poussée.

### VARIATIONS DE L'INVENTION

Selon des variations de l'invention :
- le dispositif comporte une traverse de longueur réglable, destinée à être attaché à des montants verticaux de la poussette ;
- les angles de rotations de la barre de poussée vis à vis de la traverse et du chariot électrique sont limités par des dispositifs de limitation d'angle, par exemple des arceaux, butées, en un matériau éventuellement élastique tel de la gomme, ou par une géométrie particulière des liaisons ;
- au moins un connecteur de la poussette ou du chariot électrique dispose d'un clip de fixation rapide à la traverse ou à la barre de poussée, par exemple grâce à une mâchoire mobile montée sur ressorts ;
- un connecteur comporte une languette ou un système à scratch pour l'attacher au chariot électrique ou à la poussette ;
- le système de réglage de la longueur de la traverse est constitué de rails dentés, et une vis de réglage vient serrer en contrebutée un élément denté ;
- le système de réglage de la longueur de la traverse est constitué de deux tiges coulissants dans un fourreau et une ou plusieurs vis vient bloquer ou débloquer la translation des tiges dans le fourreau ;
- le système de réglage de la barre de poussée est une grande vis tournant dans un fourreau fileté ;
- le système de réglage de la barre de poussée est constituée de deux tubes coulissant l'un dans l'autre, l'un comportant une goupille, éventuellement montée sur ressort, et l'autre des trous régulièrement espacés ;
- la barre de poussée est équipée d'un marchepied destiné à accueillir un enfant entre l'adulte et la poussette ;
- le connecteur au chariot électrique comporte une poignée permettant de transporter facilement le chariot électrique.

### DESCRIPTION SOMMAIRE DES FIGURES

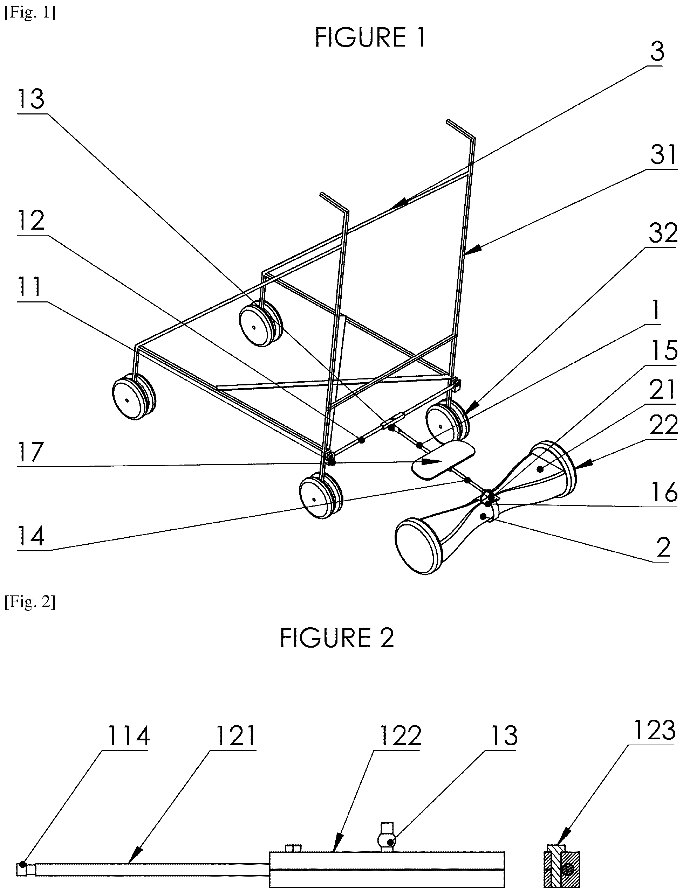

[fig.1] décrit une vue d'ensemble d'un mode de réalisation du dispositif (1) selon l'invention en utilisation avec un chariot (2) électrique gyropode biroue et une poussette (3) pour enfant :
   - le chariot électrique (2) comporte des roues (22) et des plateformes podales (21),
   - la poussette (3) a des montants verticaux (31) surplombant les roues (32) arrière,
   - le dispositif (1) selon l'invention est ici constitué de connecteurs (11) fixés aux montants verticaux (31) de la poussette (3), d'une traverse (12) clipsée aux connecteurs (11), d'une barre de poussée (14), d'un connecteur (16) attaché au gyropode électrique (2), d'un marchepied (17) pour enfants. Une liaison (13) relie la traverse (12) à la barre de poussée (14), ici la liaison (13) est une liaison rotule. Une autre liaison (16) relie la barre de poussée (14) au connecteur (16), ici la liaison (16) est une liaison pivot.
[fig.2] montre un mode de réalisation du système de réglage en longueur de la traverse (12) : la traverse est constituée de deux tiges (121) translatant dans un fourreau central (122). Seule une tige (121), la tige gauche est représentée. Une extrémité de la tige (121) est une goupille (114) qui se clipse et déclipse du connecteur (11) fixé sur la poussette (3). Les deux tiges (121) translatent dans le fourreau (122), deux vis (123) permettent d'enserrer ou libérer chaque tige (121) dans le fourreau (122). L'utilisateur peut ainsi régler la traverse (12) à la longueur voulue, en prenant soin de garder le fourreau (122) au milieu de la traverse (12).

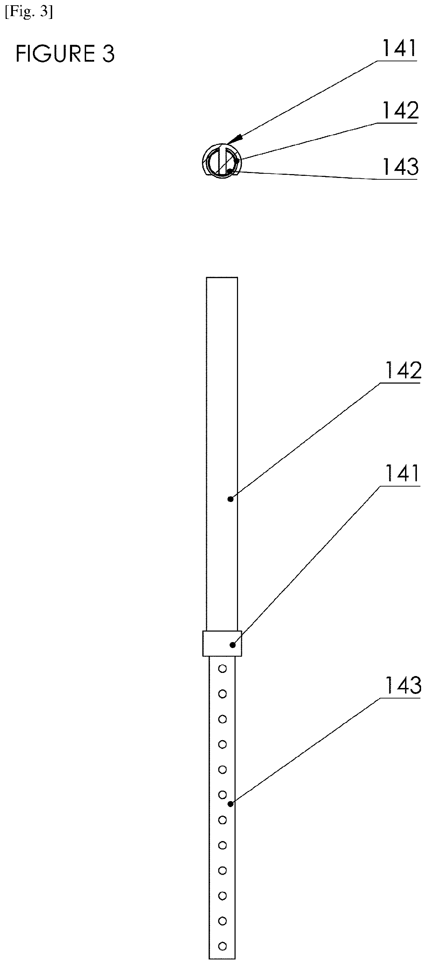

[fig.3] montre un mode de réalisation d'un système de réglage en longueur de la barre de poussée (14) : une tige (143) trouée à intervalles réguliers translate dans un fourreau (142) percé d'un trou, une goupille (141) passe à travers le fourreau (142) et la tige (143) pour bloquer la translation à la longueur souhaitée.

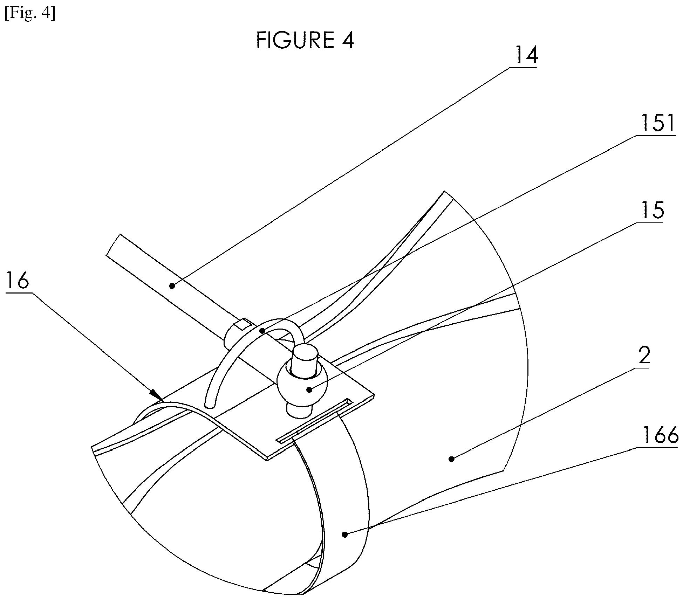

[fig.4] montre un mode de réalisation d'un système de limitation d'angle de la liaison (15) et de réalisation du connecteur (16) : le connecteur (16) est serré autour du point médian du gyropode (2) à l'aide d'un scratch (166) qui passe à travers une fente du connecteur (16). Un arceau (151) solidaire du connecteur (16) limite l'angle de débattement entre la barre de poussée (14) et le connecteur (16) solidaire du gyropode (2).

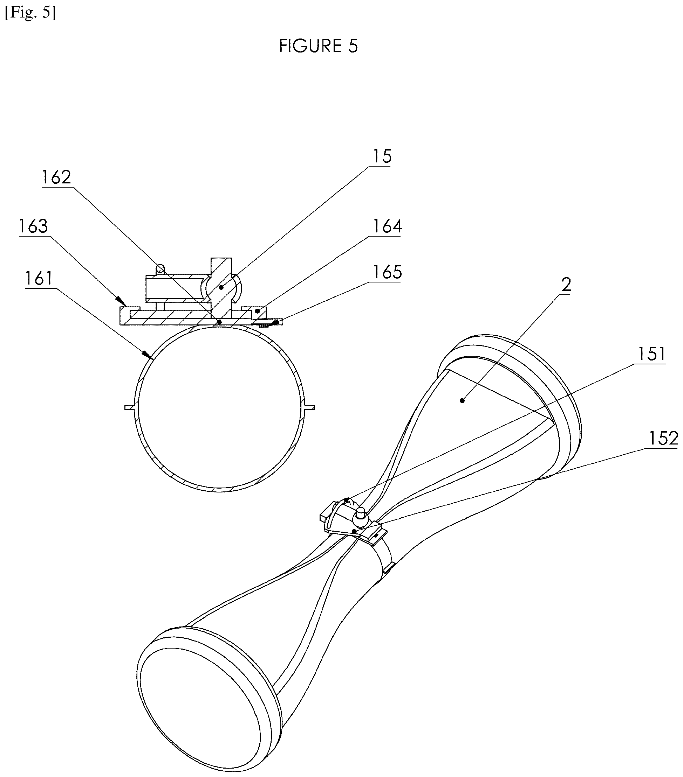

[fig.5] montre un mode de réalisation d'un système d'attache rapide de la barre de poussée (14) au connecteur (16) : le connecteur (16) est constitué d'un cerceau (16) fixé sur le gyropode électrique biroue (2). Une plaque (162) est fixée sur le cerceau (161) par rivetage, de manière à former un ensemble solidaire. Une plaque (152) solidaire de la liaison pivot (15) et comportant un arceau (151) de limitation d'angle se clipse et déclipse sur la plaque (162) au moyen d'une mâchoire fixe (163) et d'une mâchoire mobile (164). La mâchoire mobile (164) translate par rapport à la plaque (162), et un ressort (165) maintient la mâchoire mobile en position fermée. L'utilisateur vient ainsi clipser et déclipser par simple translation de la mâchoire mobile (164) la barre de poussée (14) au connecteur (16).

### MODE PRÉFÉRÉ DE RÉALISATION DE L'INVENTION

Nous décrivons maintenant notre mode préféré de réalisation de l'invention, où le dispositif (1) de poussée est particulièrement destiné aux chariots électriques biroues, commandés par l'inclinaison des pieds, et que l'on trouve dans le commerce sous l'appellation 'hoverboard' ou 'gyropode électrique biroue'.

Le dispositif (1) de poussée comporte en premier lieu des connecteurs (11) conçus pour être à demeure sur la poussette (3), et destinés à accueillir une traverse (12). De tels exemples de connecteurs (11) sont bien connus des gens du métier, ceux qui réalisent les chariots destinés au transport d'enfant, accrochés derrière les poussettes. Nous décrivons néanmoins précisément un type de ces connecteurs (11) et la manière de l'utiliser, pour que le lecteur se représente précisément une réalisation du dispositif (1) selon l'invention.

De manière habituelle, les connecteurs (11) comportent une languette, et une fente. La languette enserre le montant (31). Un système bien connu des gens du métier, permet qu'en tournant un clip destiné à accueillir la traverse (12) dans un sens ou l'autre, la languette soit serrée davantage ou déserrée davantage. Selon les usages, on rajoute, entre le montant (31) et le connecteur (11) un ruban dit de friction, en matière caoutchoutée, qui permet d'empêcher que le connecteur (11) ne glisse sur les montants (31) et que le connecteur (11) et le montant (31) ne s'abîment mutuellement. Ainsi conçus, les connecteurs (11) peuvent être fixés sur des montants (31) de différentes formes et de différents diamètres pour s'adapter à la majorité des poussettes existantes.

L'utilisateur choisit la position des connecteurs (11) sur la poussette en respectant les critères suivants :
- la hauteur des connecteurs (11) sur la poussette (31) doit être proche de la hauteur du connecteur (16) fixé sur le chariot électrique,
- les connecteurs (11) n'empêchent pas le pliage de la poussette (3),
- le dispositif (1) de poussée, une fois connecté, n'entrave pas le fonctionnement des freins ni des roues (32) de la poussette (3).

Le dispositif (1) comporte ensuite une traverse (12). La traverse (12) est de longueur réglable, de manière à s'ajuster aux différents écarts entre les connecteurs (11) possibles, l'écart entre les connecteurs (11) étant lié à l'écart entre les montants (31) verticaux de la poussette (3). Le système de réglage peut être celui détaillé à la figure 2. Dans notre mode de réalisation ici présenté, il est constitué différemment, ce que nous détaillons maintenant. Un fourreau central (122) est muni d'un pas de vis dans lequel tournent deux tiges (121) filetées. Chaque axe se termine par une goupille (114) qui se clipse dans un connecteur (11) de la poussette. Pour ajuster la longueur de la traverse (12), l'utilisateur visse ou dévisse les tiges (121) dans le fourreau central (122). Une fois la bonne longueur déterminée, l'utilisateur vérifie que le fourreau central (122) est bien à égale distance des deux goupilles (114). L'utilisateur visse alors fermement des contre-écrous contre le fourreau (122) central pour bloquer les tiges (121) dans le fourreau central (122).

Le dispositif (1) comporte aussi un connecteur (16) au chariot (2) électrique. L'utilisateur fixe sur le chariot (2) gyropode biroue, au point médian entre les deux roues (22), qui est souvent le point d'articulation entre les deux plateformes podales (21), ce connecteur (16). Dans ce mode de réalisation, le connecteur (16) comporte une large languette scratch (166) de haute qualité et une fente qui permet d'enserrer le point médian. Une rallonge de scratch est disponible avec le dispositif (1) si besoin. Le connecteur (16) est destiné à être à demeure sur le chariot (2) électrique, même lorsque l'utilisateur souhaite utiliser le chariot (2) électrique sans la poussette (3). Le connecteur (16) est pourvu du système d'attache rapide décrit à la figure (2), qui, à l'aide de deux mâchoires (163,164), l'une fixe, l'autre mobile, permet de fixer rapidement une plaque (152) solidaire du reste du dispositif (1) selon l'invention.

Le dispositif (1) comprend également une barre de poussée (14) de longueur réglable. Cette barre de poussée (14) est reliée à la traverse par une liaison (13) rotule et au connecteur (16) du gyropode par une liaison (15) pivot. Un système de réglage en longueur, décrit en figure 3, équipe la barre de poussée (14). Ces systèmes sont bien connus des gens du métier, ceux qui fabriquent les béquilles par exemple, mais on retrouve ce système de réglage dans bien des domaines. La longueur de la barre de poussée (14) est réglée par l'utilisateur de manière à ce qu'il tienne la poussette avec les bras confortables, ni trop recroquevillés, ni trop tendus.

La liaison (15) entre le connecteur (16) et la barre de poussée (14) est limitée en amplitude par un arceau (151). L'arceau (151) est en matière déformable caoutchoutée qui permet une limitation douce de l'amplitude. Cette limitation d'angle rend la conduite plus aisée et évite que l'utilisateur ne se coince les pieds.

Si l'utilisateur veut utiliser le chariot (2) électrique seul, ou la poussette (3) seule, il déclipse l'élément non souhaité en un instant, et peut utiliser l'élément seul. Les connecteurs (11) restent à demeure sur la poussette, de même que le connecteur (16) qui reste à demeure sur le chariot (2) électrique.

Des variations non limitatives de ce mode de réalisation de l'invention consistent :
- à remplacer le système de réglage de la traverse (12) par un autre, par exemple des rails dentés en matière plastique contre lesquels on vient serrer d'autres éléments coulissants, dentés également, qui, une fois serrés, bloquent la traverse à la longueur déterminée. Ces systèmes sont courants pour les plateformes à roulettes pour enfants destinés à être accrochés à l'arrière des poussettes. On peut également faire coulisser deux tubes dans un fourreau tube central, et des colliers de serrage viennent coincer les tubes coulissants selon le mécanisme classique utilisé par les fabricants de vélo pour bloquer la selle à une hauteur choisie.
- à remplacer le système de réglage de la barre de poussée (14) par un autre, par exemple l'un quelconque des systèmes décrits plus hauts concernant le réglage de la longueur de la traverse (12).
- à adjoindre sur la barre de poussée (14) un marchepied (17) permettant à un enfant de 5 à 10 ans de se mettre debout sur ce marchepied (17) entre la poussette (3) et l'adulte qui conduit le système. Ainsi, le chariot (2) électrique permet de véhiculer au moins 3 personnes : un enfant dans la poussette (3), un enfant sur le marchepied (17), l'adulte sur le chariot (2) électrique qui conduit le système ;
- à adjoindre au connecteur (16) une petite poignée de manière à rendre le transport manuel du chariot (2) électrique particulièrement facile. La poignée est préférentiellement alignée avec le sens de l'avancement du chariot (2) électrique, de manière à ne pas faire office de crochet qui pourrait se prendre dans une racine ou un quelconque obstacle et arrêter brutalement le chariot (2) électrique ;
- à modifier la position de la liaison (15), qui n'est pas nécessairement comme sur les figures au dessus du chariot (2) électrique. La liaison (15) peut notamment avantageusement être en avant du chariot (2) électrique, dans l'axe de la barre de poussée (14), ce qui permet de limiter les efforts de torsion sur la liaison (15) ;
- à proposer plusieurs formes de connecteurs (16) pour qu'il s'adapte aux gyropodes électriques monoroues, skate électriques, et plus généralement tout chariot (2) électrique où l'utilisation des mains n'est pas nécessaire pendant la conduite.

### POSSIBILITÉS D'APPLICATIONS INDUSTRIELLES

Le dispositif (1) de poussée selon l'invention est destiné aux familles avec enfant, aux professionnels des milieux de l'enfance, et à toute personne souhaitant se déplacer avec des charges lourdes.

En effet, ce dispositif (1) permet de véhiculer un adulte et un enfant ou plusieurs enfants, ou un adulte et une charge lourde : il réunit un chariot (2) électrique conçu pour transporter un adulte à une poussette (3) pour enfants ou marchandises.

Une femme enceinte ayant à faire de longs trajets à la crèche seule avec plusieurs enfants trouvera le dispositif (1) particulièrement avantageux.

Préférentiellement, le dispositif (1) se connecte et se déconnecte rapidement de la poussette (3) comme du chariot (2) électrique, ce qui permet de passer rapidement de l'utilisation de la poussette (3) seule, ou chariot électrique (2) seul, à l'utilisation de l'ensemble poussette (3) + chariot (2) électrique + dispositif (1) de poussée. Ces connexions - déconnexions rapides intéressent particulièrement les jeunes parents qui conduisent leurs enfants à la crèche ou l'école puis continuent la route seul vers leur lieu de travail, sur le chariot (2) électrique.

## Revendications

1. Dispositif (1) de liaison entre :
- un chariot électrique (2) véhiculant un adulte , par exemple préférentiellement un gyropode électrique biroue, d'appellation commerciale habituelle 'hoverboard',
- une poussette (3) pour enfants ou marchandises ;
ce dispositif (1) étant **caractérisé en ce que** :
(i) il comporte :
- un ou plusieurs connecteurs (11) à fixer sur la poussette (3),
- une barre de poussée (14) de longueur réglable,
- au moins un connecteur (16) à fixer au chariot électrique (2),
- au moins une liaison (13 ou 15) rotule ou pivot,
(ii) et **en ce que** :
- l'ensemble (1,2,3) relié via les différents connecteurs (11,16) véhicule simultanément l'adulte sur le chariot électrique (2) et les enfants/marchandises sur la poussette (3) ;
- les connecteurs (11,16) permettent des connexions-déconnexions rapides entre le dispositif (1), le chariot électrique (2), et la poussette (3) afin de passer rapidement d'une fonction à l'autre parmi les fonctions : {véhiculer simultanément l'adulte et les enfants/marchandises sur l'ensemble (1,2,3)}, {véhiculer l'adulte seul sur le chariot électrique (2)}, {véhiculer seulement les enfants/marchandises sur la poussette (3) simple, non motorisée}, {poussette (3) pliée}.

2. Dispositif (1) selon la revendication précédente, **caractérisé en ce qu'**il comporte aussi une traverse (12) de longueur réglable, destinée à être attachée par exemple aux montants (31) verticaux de la poussette (3)

3. Dispositif (1) selon l'une des revendications précédentes, **caractérisé en ce que** les angles de rotations sont limités au niveau d'une liaison (13 ou 15) par des dispositifs de limitation d'angle, par exemple des arceaux (151) ou tout type de butées, en un matériau éventuellement élastique tel de la gomme, ou par une géométrie particulière des liaisons.

4. Dispositif (1) selon l'une des revendications précédentes, **caractérisé en ce qu'**au moins un connecteur (11 ou 16) dispose d'un clip de fixation rapide à une traverse (12) ou à la barre de poussée (14), par exemple grâce à une mâchoire mobile (164) et un ressort (165).

5. Dispositif (1) selon l'une des revendications précédentes, **caractérisé en ce qu'**un connecteur (11, 16) comporte une languette, par exemple à scratch (166) pour l'attacher à la poussette ou au chariot électrique (2).

6. Dispositif (1) selon l'une des revendications précédentes **caractérisé en ce qu'**un système de réglage de la longueur de la barre de poussée (14) est constitué de d'un fourreau (142) troué dans lequel coulisse une tige trouée (143) et d'une goupille (141) éventuellement montée sur ressorts.

7. Dispositif (1) selon l'une des revendications précédentes, **caractérisé en ce qu'**un système de réglage de la traverse (12) comporte un fourreau central (122) dans lequel coulisse une tige (121), une vis (123) venant bloquer ou débloquer la translation de la tige (121) dans le fourreau (122).

8. Dispositif (1) selon l'une des revendications précédentes, **caractérisé en ce qu'**un système de réglage de la traverse (12) comporte une grande vis tournant dans un fourreau fileté.

9. Dispositif (1) selon l'une des revendications précédentes, **caractérisé en ce que** la barre de poussée est équipée d'un marchepied (17) destinée à accueillir un enfant entre l'adulte et la poussette (3).

10. Dispositif (1) selon l'une des revendications précédentes, **caractérisé en ce que** le connecteur (16) comporte une poignée permettant de transporter facilement le chariot (2) électrique.
